# EUROPEAN PATENT APPLICATION

(11) **EP 4 174 719 A1**
(43) Date of publication of application: **03.05.2023**
(21) Application number: 21306492.6
(22) Date of filing: 26.10.2021
(51) Int. Cl.: G06K 19/077, G06K 19/02

(54) **LEADFRAMELESS CONTACTLESS MODULE**

(71) Applicant: Thales Dis France SAS, 92190 Meudon (FR)
(72) Inventor: BYRNE, David, 13600 LA CIOTAT (FR); DOSSETTO, Lucile, 13600 LA CIOTAT (FR); OTTOBON, Stéphane, 13600 FRANCE (FR); SEBAN, Frédérick, 13600 LA CIOTAT (FR)
(74) Representative: Lotaut, Yacine Diaw

(57) **Abstract**

A contactless electronic module (1) for a data carrier (2) comprises a substrate (3), at least one electronic chip (4), and at least one electrical connector (5). The electronic chip (4) is arranged on the substrate (3), and the electrical connector (5) is in connection with the electronic chip (4). The substrate (3) is electrically non-conductive.

## Description

### TECHNICAL FIELD

The present invention relates to a contactless electronic module as claimed in claim 1, to a data carrier comprising such a contactless electronic module as claimed in claim 7, to a method of producing a contactless electronic module as claimed in claim 9, and to a method of producing a data carrier as claimed in claim 14.

### PRIOR ART

Data carriers such as smartcards comprise electronic modules which are intended to perform various operations such as payment operations. These operations are typically conducted by means of a coupling between the electronic module and an external device such as an external receiver or reader unit. To this end different types of coupling exist. For instance, the coupling can occur via a physical contact or without a physical contact being established between the data carrier and the external device. In the former case the data carrier comprises an electrical element such as a pattern of metal contact that electrically connects to the electronic module. In the latter case the data carrier operates without such an electrical connection and the electronic module can be referred to as a contactless electronic module.

In the state of the art it is common to provide contactless electronic modules with a leadframe, i.e. an electrically conductive structure such as metal structures through which a communication between the contactless electronic module with an outside is established. A major drawback of such contactless electronic modules are the high costs being associated with the electrically conductive leadframe.

### SUMMARY OF THE INVENTION

It is an object of the present invention to provide an improved contactless electronic module.

In particular it is an object to provide a contactless electronic module that is cost-effective.

This object is achieved with a contactless electronic module according to claim 1. In particular, the contactless electronic module for a data carrier comprises a substrate, at least one electronic chip, and at least one electrical connector. The electronic chip is arranged on the substrate. The electrical connector is in connection with the electronic chip. The substrate is electrically non-conductive.

In other words, the substrate preferably consists of one or more electrically non-conductive materials. Again in other words, the substrate does not comprise any electrically conductive materials or elements. In particular, the contactless electronic module according to the invention is a so-called leadframeless module, as it does not comprise a leadframe or any other metal structures as commonly used inside a chip package of an electronic module. Thus, in a sense the substrate can be seen as a replacement of the leadframe or of any other metal structure as commonly used in the field of the invention. Consequently, a contactless electronic module at low cost is provided as there is no longer the need to buy or produce an expensive film or grid made of metal.

In addition, the non-conductive substrate of the contactless electronic module according to the invention can be of a lower thickness ("z-dimension") as well as a smaller size ("x,y-dimension") than contactless electronic modules of the state of the art and comprising a leadframe. In fact, in the present invention a low thickness can be achieved since a loop can be arranged tense between the electronic chips. The small size can be achieved since the electrical connection can already be achieved with the electrical connector, preferably being a small wire, and an electrically conductive element such as conductive glue, see further below, as compared to the current contactless electronic modules which need at least 3mm around for a good connection in terms of capability and process.

Furthermore, and as will be explained in greater detail below, the usage of the electrically non-conductive substrate allows the contactless electronic module according to the invention to be inserted in a data carrier such as a smart card by using a standard embedding method also known as "Bird technology". As such, no modification of a structure of the data carrier is required, wherein a current process and equipment can be maximally reused.

The electronic chip preferably corresponds to an electronic chip as it is known in the art.

Said electronic chip can also be referred to as a die. The electronic chip or die preferably is an integrated circuit chip, a microprocessor, a microcontroller, a memory or the like. The electronic chip or die is preferably produced from a wafer, as it is commonly known. Moreover, the electronic chip or die preferably has contactless functionalities such as radio frequency functionalities, e.g. a transmitting and receiving unit for transmitting and receiving radio frequency signals, etc.

The substrate preferably comprises or consists of one or more polymers and/or one or more cellulose-comprising compounds and/or one or more lignin-comprising compounds and/or one or more fiber-reinforced plastics. The one or more polymers preferably are synthetic polymers and/or thermoplastic polymers and/or thermosetting polymers. The one or more polymers particularly preferably are polyethylene terephthalate (PET) and/or polyethylene naphthalate (PEN) and/or polyvinyl chloride (PVC) and/or polycarbonate (PC), and/or epoxy and/or polyester, and/or polyimide. The one or more cellulose-comprising compounds and/or the one or more lignin-comprising compounds preferably comprise or consist of paper and/or wood. The one or more fiber-reinforced plastics preferably comprise an epoxy resin and/or a polyester resin being reinforced with inorganic fibers such as glass.

The electronic chip preferably comprises a surface, and wherein the surface of the electronic chip is preferably arranged in direct contact with a surface of the substrate. A direct contact is understood as an immediate contact, i.e. a contact wherein the surface of the electronic module touches the surface of the substrate.

In this case it is preferred that the substrate corresponds to an adhesive substrate such as an adhesive tape. In this case, it is furthermore preferred that the electronic chip is bonded on the adhesive substrate. That is, the substrate itself can have adhesive properties. For instance, the substrate could be provided by a thermoset resin such as an epoxy thermoset resin which is not polymerized and wherein in a stage wherein the substrate is still adhesive, the electronic chip is arranged on the substrate.

Alternatively, it is likewise conceivable that the surface of the electronic chip is in contact with the surface of the substrate via at least one adhesive element. In other words, it is conceivable that an indirect contact is established between the substrate and the electronic chip by means of the adhesive element, and wherein said adhesive element is a separate element being provided in addition to the substrate and the electronic chip. In fact, the adhesive element is preferably arranged between the surface of the substrate and the surface of the electronic chip. Said adhesive element preferably corresponds to an adhesive as it is known in the art, e.g. a glue or a die attach adhesive. Another conceivable option comprises the lamination of at least one adhesive film on the surface of the substrate.

The electrical connector preferably comprises or consists of one or more metals and/or one or more metal-containing compounds. In fact, the electrical connector preferably comprises or consists of gold and/or silver and/or copper and/or palladium. Additionally or alternatively it is preferred that the electrical connector corresponds to a wire.

The electrical connector is furthermore preferably in connection with the substrate, preferably with a surface of the substrate. In particular, the electrical connector preferably comprises a first free end that is in connection with the electronic chip. To this end it is particularly preferred that the electrical connector, in fact its first free end, is in connection with the substrate via a contactless pad being arranged on the electronic chip. Thus, the electronic chip preferably comprises at least one contactless pad. The contactless pad preferably is a chip bond pad as it is known in the art and which is configured for contactless functionalities of the electronic chip. Said chip bond pad or contactless pad preferably is provided in the form of a surface area of the electronic chip and allows a connection of the electronic chip to an outside of the chip by a standard wire bonding process such as wirebonding, e.g. reverse bonding, flip chip, soldering, etc. To this end it is preferred that the electrical connector, in particular its first free end, is connected to the electronic chip, in particular to the contactless pad via bonding as just described. Said bonding preferably corresponds to a bonding being performed by a bonding process as it is known in the art as well.

Moreover, the electrical connector preferably comprises a second free end that is in connection with the substrate. To this end it is conceivable that the second free end of the connector is in connection with the surface of the substrate, for instance in direct connection or via the at least one adhesive element. In the former case said connection could be achieved by means of an ultrasonic connection, similar to a wire embedding being done for antennas. For instance, a stitching mode as it is available on some die bonding machines could be used. In the latter case said second free end could be arranged between the surface of the substrate and the adhesive element. However, it is likewise conceivable that the second free end of the electrical connector is arranged or embedded within the adhesive element, which adhesive element is in turn arranged on the surface of the substrate. In any case the adhesive element preferably corresponds to one known in the state of the art e.g. a glue or a die attach adhesive or an adhesive film.

The contactless electronic module preferably further comprises at least one protective element.

The protective element preferably comprises or consists of a resin. The protective element preferably corresponds to a protective element as it is known in the art, e.g. an epoxy or acrylate resin that can be UV-cured and/or thermal cured, and that can be applied by resin dispensing or in a molding process, etc. as it is known in the state of the art as well.

The protective element preferably at least partially covers the electronic chip and/or the electrical connector. Additionally or alternatively at least part of the electrical connector, in particular a free end of the electrical connector, is preferably not covered by the protective element. That is, the protective element preferably encapsulates the electronic chip and preferably also part of the electrical connector. At least part of the electrical connector, in particular its free end being connected to the substrate, i.e. its second free end mentioned above, preferably remains uncovered. In other words, said free end or second free end preferably protrudes from the protective element.

It is furthermore conceivable that the contactless electronic module comprises at least one stiffening element. Said stiffening element is preferably arranged at least partially on the protective element, particularly preferably in a region of the protective element that faces away from the substrate. The stiffening element preferably corresponds to a stiffening element as it is known in the art, e.g. an RLC stiffener.

In other words, when seen along an extension direction extending from the substrate, it is preferred that the electronic chip is arranged after the substrate, and that the stiffening element is arranged after the electronic chip. In other words, the electronic chip is sandwiched between the substrate and the stiffening element.

The contactless electronic module preferably comprises at least one further electrical connector. The electrical connector and the further electrical connector are preferably arranged opposite to one another with respect to the electronic chip and/or extend from the electronic chip along opposing connection directions.

To this end it is preferred that the electrical connectors are arranged on a common surface of the electronic chip. It is furthermore preferred that the electrical connectors are arranged opposite to one another with respect to a vertical plane running vertically through the electronic chip, in particular vertically through said common surface of the electronic chip. Hence, the electrical connectors are preferably arranged on opposite sides of said common surface of the electronic chip. To this end it is conceivable that the electrical connectors are arranged in a mirror-inverted manner with respect to one another or that they are arranged in a staggered manner with respect to one another. For example, if the electronic chip has the shape of a square, a mirror-inverted arrangement of the electrical connectors could be provided by electrical connectors being arranged centrally in the region of two opposite sides of said square. A staggered arrangement of the electrical connectors could be provided by electrical connectors being arranged in the region of the two diagonally opposite corner regions of the square. Electrical connectors extending from the electronic chip along opposing connection directions are for example electrical connectors that do not extend parallel to one another. However, it should be noted that any arrangement of two or more electrical connectors and/or any connection directions of two or more electrical connectors are likewise conceivable. For instance, two or more electrical connectors could be arranged on a same side of the electronic module and/or could extend along connection directions running parallel to one another.

The electronic chip preferably comprises a top side and an opposing bottom side. The top side is preferably in connection with the substrate, in particular with the surface of the substrate. The bottom side of the electronic chip is preferably in connection with the electrical connector(s). The one or more electrical connectors are preferably arranged on the surface of the electronic chip that provides the bottom side of the electronic chip.

A top side and an opposing bottom side can also be assigned to the contactless electronic module. In an installed state of the contactless electronic module, e.g. in the event that the contactless electronic module is arranged in a data carrier, the top side of the contactless electronic module preferably faces or even provides a top side of the data carrier. The top side of the data carrier in turn preferably faces a user or holder of the data carrier in the event that the data carrier is used such as for the execution of a payment transaction, see also further below.

It is preferred that the substrate provides the top side of the contactless electronic module. It is particularly preferred that the substrate provides the top side of the data carrier in the event that the contactless electronic module is arranged in a data carrier. In other words, it is preferred that the contactless electronic module is not arranged or embedded within a data carrier but that it is arranged in a region of the top side or even provides the top side of the data carrier.

In other words, in the installed state of the contactless electronic module, the substrate of the contactless electronic module preferably is visible for an observer. To this end it is particularly preferred that a top surface of the substrate faces towards an outside and is therefore visible for an observer. Said top surface of the substrate corresponds to a surface being opposite to the surface of the substrate being in connection with the electronic chip. Consequently, the surface of the substrate being in connection with the electronic chip can be referred to as bottom surface of the substrate.

Hence, with respect to an extension direction extending from the top side of the contactless electronic module towards the bottom side of the contactless electronic module, the electronic chip is preferably arranged after the substrate. Furthermore, the free end of the electrical connector, i.e. the first free end mentioned above, is preferably arranged after the electronic chip with respect to the extension direction. A stiffening element, if present, is preferably arranged after the electronic chip and after said free end of the electrical connection with respect to the extension direction.

Moreover, the contactless electronic module can furthermore comprise at least one personalization element. Said personalization element preferably serves the purpose of attributing personalized information such as personal data of the holder of the contactless electronic module, in particular of the data carrier to the contactless electronic module or to the data carrier, respectively. The personalization element preferably has the shape of an image and/or of an alphanumeric character. Non-exhaustive examples of an image are a portrait or photograph or biometric information such as a fingerprint e.g. of the holder of the contactless electronic module or the data carrier, an outline of a country, a state coat of arms, a state flag, a signature panel, geometric objects such as lines, circles, etc. Non-exhaustive examples of an alphanumeric character are a date of birth, a name, a social security number e.g. of the holder of the contactless electronic module or the data carrier, an expiry date, etc.

The personalization element is preferably arranged on and/or in a surface of the substrate, in particular on and/or in the top surface of the substrate mentioned above. A personalization element being arranged on the surface of the substrate can be a print or the like. A personalization element being arranged in the surface of the substrate can be an embossing, or could be made by etching or laser engraving or the like.

However, it should be noted that the contactless electronic module could likewise be arranged or embedded within the data carrier.

In another aspect a data carrier comprising at least one contactless electronic module as described above is provided. The data carrier preferably comprises a top side, and wherein the contactless electronic module is preferably arranged in a region of the top side of the data carrier and particularly preferably provides at least part of the top side of the data carrier.

The data carrier preferably constitutes or is part of a security document. The security document preferably is a smart card, a credit card, a driving licence, an identity card, a passport, a data page or the like.

The data carrier preferably comprises at least one carrier body, wherein the carrier body comprises a top side and an opposing bottom side, and wherein the contactless electronic module is preferably arranged in a region of the top side of the carrier body and particularly preferably provides at least part of the top side of the carrier body.

The carrier body preferably corresponds to a card body as it is commonly known in the card industry. That is, the carrier body preferably comprises one or more, in particular a plurality of layers that are arranged above one another with respect to an extension direction. Said layers preferably correspond to plastic layers and/or to metallic layers.

The top side of the carrier body preferably constitutes the top side of the data carrier. Hence, in the event that the contactless electronic module provides at least part of the top side of the carrier body the contactless electronic module provides at least part of the top side of the data carrier. To this end it is particularly preferred that the substrate of the contactless electronic module provides at least part of the top side of the carrier body and thus of the data carrier.

As mentioned earlier, the top side of the contactless electronic module, in particular a top surface of the substrate, can comprise one or more personalization elements. As such it is preferred that the top side of the carrier body, and thus the top side of the data carrier, comprises one or more personalization elements.

The carrier body preferably comprises at least one cavity, and wherein the contactless electronic module and/or at least one antenna being in communication with the contactless electronic module are at least partially arranged in the cavity.

That is, the carrier body preferably furthermore one or more cavities, and wherein the contactless electronic module is at least partially embedded in said cavity. The carrier body preferably furthermore comprises components as they are commonly used in the state of the art. For instance, it is preferred that the carrier body comprises at least one antenna and at least one electrically conductive element that enables a communication between the contactless electronic module and the antenna. Said conductive element preferably corresponds to one or more electrically conductive materials as they are known in the art, e.g. silver glue or the like. To this end it is particularly preferred that the conductive element is provided in one or more cavities in the carrier body.

In another aspect a method of producing a contactless electronic module, in particular a contactless electronic module as described above, is provided. The method comprises the steps of i) providing a substrate, ii) providing at least one electronic chip, and iii) providing at least one electrical connector. The electronic chip is arranged on the substrate, and the electrical connector is in connection with the electronic chip. The substrate is electrically non-conductive.

That is, the contactless electronic module preferably corresponds to a contactless electronic module as described above. Hence, any explanations made with respect to the contactless electronic module described above likewise apply to the method of producing a contactless electronic module and vice versa.

The method preferably further comprises the step of arranging at least one further electronic chip on the substrate, and connecting the electrical connector being in connection with the electronic chip to the further electronic chip.

That is, it is preferred to arrange at least two electronic chips on the substrate, in particular on the surface of the substrate and thus on a common surface of the substrate. Thereafter, it is preferred to connect the electronic chips to one another by the electrical connector. The electrical connector preferably corresponds to a wire as mentioned above. In doing so it is preferred that one free end of the electrical connector is connected to one electronic chip and the other free end of the electrical connector is connected to the other electronic chip. It should be noted that a plurality of electronic chips are preferably arranged on the substrate, wherein a plurality of electrical connectors is used to connect the electronic chips to one another. To this end it is particularly preferred that one electrical connector is in connection with two electronic chips. Hence, and unlike to the state of the art, the electrical connectors are connected between the electronic chips and not to a leadframe or metallisations or the like. Instead, the electronic chips can be attached to the electrically non-conductive substrate, and neighbouring electronic chips are thereafter chained together preferably by means of pad connections, i.e. by connecting the electrical connectors to the contactless pads of neighbouring electronic chips. Consequently, metal holes to bond the connector elements can be dispensed with since neighbourhood chip pads can be used to bond the electrical connectors.

Said plurality of electronic chips is preferably arranged along one or more lines extending along one or more arrangement directions. Said one or more arrangement directions preferably correspond to straight lines or essentially straight lines. Furthermore, two or more arrangement directions preferably run parallel with respect to one another.

It is furthermore preferred that a first electronic chip of these plurality of electronic chips and a last electronic chip of these plurality of electronic chips is connected to an initial dummy electronic chip and a final dummy electronic chip, respectively. Said initial and final dummy electronic chips are preferably located at a beginning and at an end of a particular arrangement direction. Said initial and final dummy electronic chips are preferably electronic chips being merely used for the production of the contactless electronic module according to the invention, which initial and final dummy electronic chips are however not intended for an arrangement in a data carrier. In particular, said initial and final dummy electronic chips serve the purpose of allowing a connection of the electronic chips with the electrical connectors in the described manner.

A reel-cutting-machine as it is known in the art is preferably used for the production of the contactless electronic module. The reel-cutting-machine defines a longitudinal direction, and wherein the electronic chips are preferably arranged along said longitudinal direction. That is, the one or more arrangement directions along which the electronic chips are arranged on the substrate preferably run parallel to the longitudinal direction of the reel-cutting-machine.

It is furthermore preferred that the electrical connectors are connected to successive electronic modules with respect to a particular arrangement direction. As such, it is preferred that the connection direction along which the electrical connectors are connected to the electronic modules run parallel to the arrangement direction. Consequently, it is preferred that the connection direction of the electrical connectors run parallel to the longitudinal direction of the reel-cutting-machine. In other words, it is preferred that the electronic chips are not connected to one another by the electrical connectors along a direction running transverse to the arrangement direction and/or transverse to the longitudinal direction of the reel-cutting-machine.

The method preferably further comprises the step of providing at least one adhesive element particularly preferably on a surface of the substrate and/or in a lamination step. The method preferably further comprises the step of connecting at least part of the electrical connector with the substrate, preferably with a surface of the substrate and/or in a lamination step. Said adhesive element preferably corresponds to the adhesive element mentioned above, i.e. it preferably comprises or consists of a glue or a die attach adhesive or an adhesive film that is preferably provided on the surface of the substrate and which adhesive element preferably serves the purpose of connecting the electronic chip and/or the electrical connector to the substrate, in particular to the surface of the substrate. Said adhesive is particularly preferably provided in a lamination step. Hence, the electrical connector and/or the electronic chip are preferably connected to the substrate by lamination. The lamination step can be performed by a lamination apparatus comprising lamination plates as it is known in the art.

The method preferably further comprises the step of providing at least one protective element. The protective element preferably at least partially covers the electronic chip and/or the electrical connector. It is furthermore preferred that at least part of the electrical connector is not covered by the protective element. To this end it is preferred that a region of the electrical connector that is connected to the electronic chip, in particular the region of the free ends of the electrical connector, is covered by the protective element. A region between the region of connection to the electronic chip however is preferably not covered by the protective element. Said uncovered region can be seen as a middle region of the electrical connector that is arranged between the free ends of the electrical connector. The protective element preferably corresponds to the protective element mentioned above, i.e. it preferably comprises or consists of a resin.

At least part of the electrical connector is preferably connected to the substrate by performing a step of pressing the electrical connector onto the substrate. Said step of pressing is preferably performed in the lamination step, particularly preferably by the lamination plates. Said part of the electrical connector preferably corresponds to a region where the electrical connector is not covered by a protective element. In other words, it is preferred to press the electrical connector in the uncovered region or the middle region of the electrical connector that is arranged between the free ends of the electrical connector. Also in the absence of a protective element is it preferred to press said region, i.e. a middle region of the electrical connector or centrally through the electrical connector. If an adhesive element is present the step of pressing is preferably performed in the region of the adhesive. In fact, it is particularly preferred to provide the adhesive element while the electrical connector is pressed. It is particularly preferred that the step of pressing and the provision of the adhesive element is performed in a combined or common step of lamination of an adhesive such as hotmelt, which serves the purpose of connecting the electrical connector to the substrate and to maintain the electrical connector in a desired position.

It is furthermore preferred that at least one recess is punched into the adhesive element in a punching step before the adhesive element is provided on the substrate, and wherein said at least one recess is preferably provided at least partially in a region of the electronic chip and/or of the electrical connector, whereby the electronic chip and/or the electrical connector comprises in the region of the recess an exposed area.

In other words, it is preferred that the adhesive element being provided in the lamination step comprises at least one recess that has been punched into the adhesive element before the adhesive element is pressed onto the substrate. Said recess is preferably arranged such that, in the applied state of the adhesive element, the recess uncovers at least a part of the electronic chip and/or of the electrical connector. These uncovered parts can also be seen as exposed parts of the electronic chip and the electrical connector. The uncovered or exposed part of the electrical connector is preferably connected to the antenna being provided in the carrier body, see above. It is furthermore preferred that said connection is established by means of at least one conductive element such as silver glue or solder paste or the like.

The method preferably further comprises the step of cutting, wherein the electrical connector extending between the electronic chip and the further electronic chip is cut so as to form individual contactless electronic modules.

That is, after two or more electronic chips are connected to one another by the electrical connector(s), it is preferred to cut through said electrical connector(s) as well as through the substrate, etc., so as to form individual contactless electronic modules, i.e. in order to separate the electronic modules from one another. In other words, the step of cutting allows to singulate each contactless electronic module, wherein the electrical connectors between the electronic chips are preferably cut so as to form parts of electrical connectors protruding from each electronic chip. It is furthermore preferred that the contactless electronic modules are cut into a desired shape. That is, the contactless electronic modules can be of different shapes such as a rectangular, a round, an oblong, a customer-defined shape such as a customer logo, etc.

To this end it is furthermore preferred to cut through a region where the electrical connector is not covered by a protective element. In other words, it is preferred to cut through the uncovered region or the middle region of the electrical connector that is arranged between the free ends of the electrical connector. Also in the absence of a protective element is it preferred to cut through said region, i.e. through a middle region of the electrical connector or centrally through the electrical connector. By cutting through the electrical connector, a further free end of the electrical connector is formed in the middle region and at the position of the cut. Said further free end is preferably in brought into connection with the substrate.

In any case it is preferred to cut through a region where the electrical connector is in connection with the substrate, for instance in the region of the adhesive element and/or in the region where the electrical connector has been pressed onto the substrate.

In another aspect a method of producing a data carrier, preferably a data carrier as described above, is provided. The method comprises the steps of i) providing at least one contactless electronic module as described above and/or as produced in the method as described above, and ii) providing at least one carrier body. The carrier body preferably comprises a top side, and wherein the contactless electronic module is preferably arranged in a region of the top side of the carrier body and particularly preferably provides at least part of the top side of the carrier body. Additionally or alternatively the carrier body preferably comprises at least one antenna being configured for communication with the contactless electronic module.

Any explanations provided with regard to the contactless electronic module and/or the method of its production and/or the data carrier likewise apply to the method of producing the data carrier and vice versa.

That is, it is preferred that the data carrier constitutes or is part of a security document. It is furthermore preferred that the carrier body comprises a top side and an opposing bottom side, and wherein the contactless electronic module is preferably arranged in a region of the top side of the carrier body and particularly preferably provides at least part of the top side of the carrier body.

The carrier body preferably corresponds to a card body as it is commonly known in the card industry. That is, the carrier body preferably comprises one or more, in particular a plurality of layers that are arranged above one another with respect to an extension direction. Said layers preferably correspond to plastic layers and/or to metallic layers. At least one of the layers preferably comprises at least one antenna.

The top side of the carrier body preferably constitutes the top side of the data carrier. Hence, in the event that the contactless electronic module provides at least part of the top side of the carrier body the contactless electronic module provides at least part of the top side of the data carrier. To this end it is particularly preferred that the substrate of the contactless electronic module provides at least part of the top side of the carrier body and thus of the data carrier.

The method preferably further comprises the step of milling, wherein at least one cavity is milled into the carrier body. The step of milling is preferably performed in a standard milling process as it is commonly known in the card industry. The contactless electronic module can be located in the data carrier at any desired location since no ISO location has to be respected. Consequently, also the cavity can be milled in any desired location.

Furthermore, the cavity can be of any desired size and geometry. For instance, the cavity can be designed to essentially fit the contactless electronic module only. However, it is also conceivable that the cavity extends into other regions of the carrier body, such as into the region of the antenna. As such, it can be said that a region of the carrier body comprising the antenna is at least partially milled as well.

The method preferably further comprises the step of embedding, wherein the contactless electronic module is at least partially embedded in the cavity and is preferably electrically connected to the antenna.

Hence, after the cavity is generated, the contactless electronic module is preferably at least partially embedded in said cavity and particularly preferably such, that the bottom side of the contactless electronic module faces a bottom side of the cavity and that the top side of the contactless electronic module faces towards an outside of the cavity.

After the step of milling and prior to the step of embedding it is preferred that at least one electrically conductive element is provided in the cavity. Said conductive element preferably corresponds to one or more electrically conductive materials as they are known in the art, e.g. silver glue or the like. Said conductive element serves the purpose of enabling an electrical connection between the contactless electronic module and the antenna and/or enabling a communication between the contactless electronic module and an antenna being provided in the data carrier. Consequently, the electrically conductive element is preferably provided in the region of the antenna as well. The conductive element is preferably deposited by dispense or screen printing one or more conductive materials on the antenna being provided in the carrier body, in particular in the region of the cavity, and/or on at least part of the electrical connector. To this end it is particularly preferred that the conductive element is provided such as to be in the region of the electrical connector that is not covered by a protective element such as on said part of the electrical connector that is protruding from the protective element.

That is, it is preferred that in the step of embedding the contactless electronic module is electrically connected to the antenna, wherein the uncovered or exposed parts of the electrical connector, in particular the uncovered or exposed wires, are connected to the antenna, and wherein the uncovered or exposed wires are connected to the antenna by the conductive element being deposited on the antenna and/or on the module.

As mentioned earlier, the top side of the contactless electronic module, in particular a top surface of the substrate, can comprise one or more personalization elements. To this end it is preferred that the personalization element(s) are provided on the top side of the contactless electronic module before and/or after the at least partially embedding of the contactless electronic module in the cavity of the carrier body. Hence, the method of producing the data carrier can furthermore comprise the step of personalization, wherein one or more personalization elements are provided on the contactless electronic module.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1a-1g: show different steps of producing a contactless electronic module according to the invention;
- Fig. 2: shows a top view of a contactless electronic module according to the invention;
- Fig. 3: shows a bottom view of a contactless electronic module according to the invention;
- Fig. 4a: shows a sectional view through several contactless electronic modules according to the invention, wherein the contactless electronic modules are connected to one another by electrical connectors;
- Fig. 4b: shows a sectional view through one contactless electronic module according to figure 4a;
- Fig. 5: shows a sectional view through two contactless electronic modules according to the invention, wherein the contactless electronic modules are connected to one another by electrical connectors;
- Fig. 6: shows a sectional view through two contactless electronic modules according to the invention, wherein the contactless electronic modules are connected to one another by electrical connectors;
- Fig. 7: shows a sectional view through two contactless electronic modules according to the invention, wherein the contactless electronic modules are connected to one another by electrical connectors;
- Fig. 8: shows a sectional view through the contactless electronic modules according to figure 7, wherein the electrical connectors are connected to a substrate of the contactless electronic modules;
- Fig. 9: shows a partial sectional view through a contactless electronic module according to the invention being embedded in a carrier body;
- Fig. 10: shows a top view on a carrier body comprising a contactless electronic module according to the invention;
- Fig. 11: shows a top view on another carrier body comprising a contactless electronic module according to the invention;
- Fig. 12: shows a top view on another carrier body comprising a contactless electronic module according to the invention;
- Fig. 13: shows a top view on another carrier body comprising a contactless electronic module according to the invention, wherein the contactless electronic module comprises a personalization element;
- Fig. 14: shows a top view on another carrier body comprising a contactless electronic module according to the invention, wherein the contactless electronic module comprises another personalization element.

### DESCRIPTION OF PREFERRED EMBODIMENTS

Various aspects of the contactless electronic module 1 according to the invention and its method of processing will be explained now in greater detail and with respect to the figures.

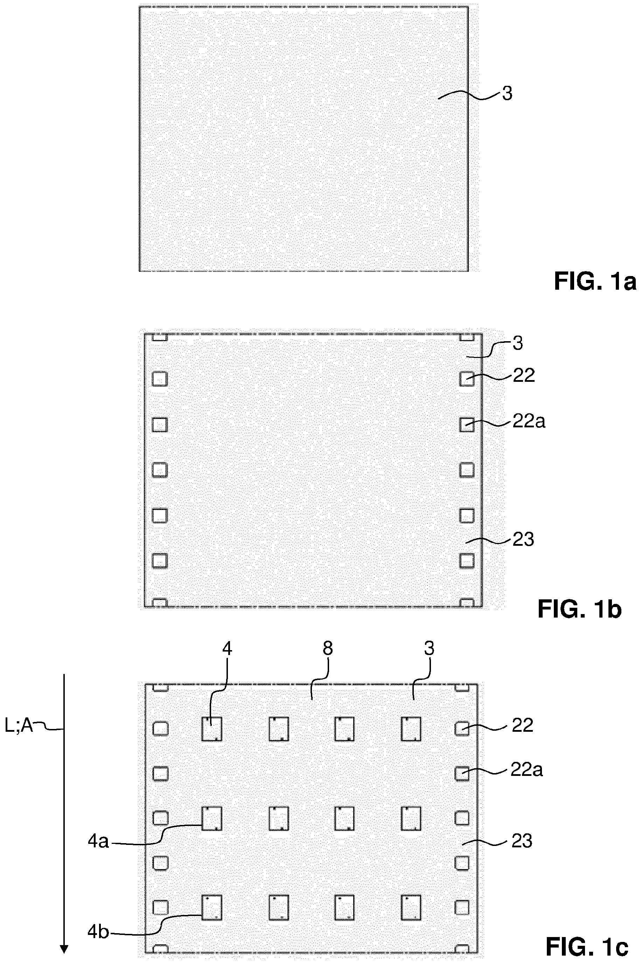

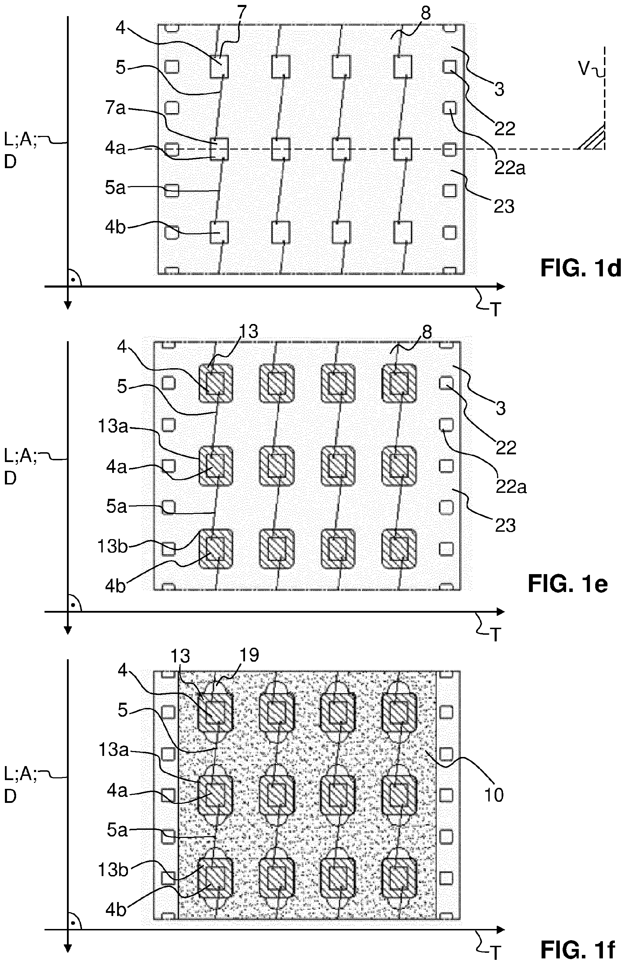

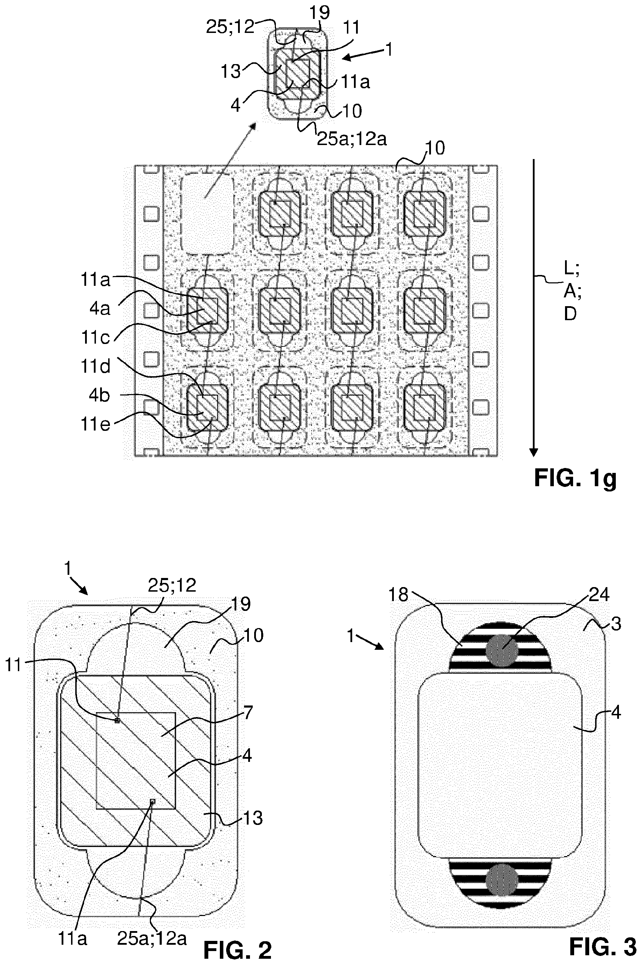

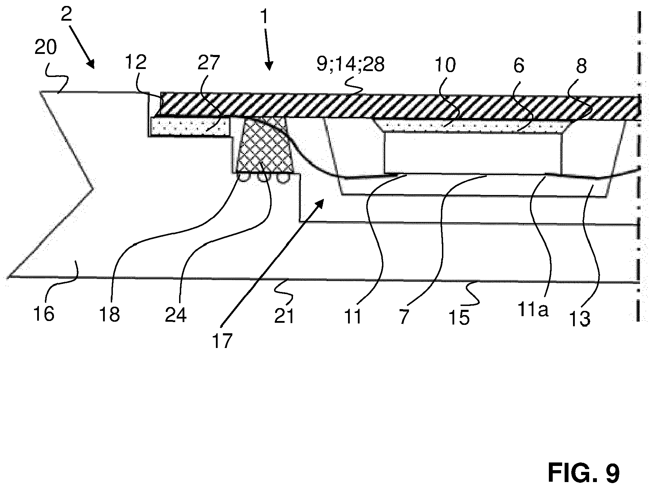

Figures 1a to 1g depict different steps of the method of producing the contactless electronic module 1. In fact, and as follows from figure 1a, a substrate 3 is provided. Said substrate 3 consists of one or more electrically non-conductive materials and corresponds here to a so-called adhesive tape. In other words, the substrate 3 does not comprise a leadframe or any other metal structures as commonly used inside a chip package of an electronic module. After providing the substrate 3, several perforations 22, 22a, ...are provided in side areas 23 of the substrate 3, which perforations 22, 22a, ... serve the purpose of machine handling the substrate 3 by means of a reel-cutting machine (not depicted), see figure 1b. Thereafter, a plurality of electronic chips 4, 4a, 4b, ... are arranged on a surface 8 of the substrate 3, see figure 1c. Said plurality of electronic chips 4, 4a, 4b, ... is arranged here along four lines, each line extending along an arrangement direction A. Here, four arrangement directions A corresponding to straight lines run parallel with respect to one another as well as parallel with respect to a longitudinal direction L of the reel-cutting machine. As follows from figure 1d, two electronic chips 4, 4a; 4a, 4b; ... are in each case connected to one another by an electrical connector 5, 5a, .... Here, the electrical connector 5, 5a, ... corresponds to a wire. To this end the electrical connectors 5, 5a, ... are connected to successive electronic chips 4, 4a, ... with respect to a particular arrangement direction A. As such, it is preferred that a connection direction D along which the electrical connectors 5, 5a, ... are connected to the electronic modules 1 run parallel to the arrangement direction A. Consequently, it is preferred that the connection directions D of the electrical connectors 5, 5a, ... run parallel to the longitudinal direction L of the reel-cutting-machine. In other words, it is preferred that the electronic chips 4,... are not connected to one another by the electrical connectors 5, 5a, ... along a direction running T transverse to the arrangement direction A and/or transverse to the longitudinal direction L of the reel-cutting-machine. Moreover, the electrical connectors 5, 5a, ... are arranged on a common surface 7 of the individual electronic chips 4,... and are arranged opposite to one another with respect to a fictitious vertical plane V running vertically through said common surface 7 of the individual electronic chip 4,.... Thereafter, a protective element 13 is provided on each electronic chip 4,..., see figure 1e. The protective element 13 encapsulates the electronic chips 4,... and part of the electrical connectors 5, 5a, ... and corresponds here to an epoxy or acrylate resin that can be UV-cured and/or thermal cured as it is known in the art. As follows from figure 1f, an adhesive element 10 is furthermore provided. Moreover, recesses 19, 19a, ... are punched into the adhesive element 10 in a punching step before the adhesive element 10 is provided on the substrate 3. As best seen in figure 1f, said recesses 19, 19a, ...are provided in a region of the electronic chips 4,... and of the electrical connectors 5, 5a, ... in a region where the electrical connectors 5, 5a, ... are connected to the electronic chips 4,..., whereby the electronic chips 4,... and the electrical connectors 5, 5a, ... comprises in the region of the recess 19, 19a, ... an exposed area. Hence, in the applied state of the adhesive element 10 depicted in figure 1f, the recesses 19, 19a, ... uncover the electronic chips 4,... and part of the electrical connectors 5, 5a, .... These uncovered parts can also be seen as exposed parts of the electronic chip 4,... and the electrical connector 5, 5a, .... The uncovered or exposed part of the electrical connectors 5, 5a, ... are preferably connected to an antenna 18 being provided in a carrier body 16 of a data carrier 2 by and an electrically conductive element 24 enabling a communication between the contactless electronic module 1 and the antenna, see figures 3 and 9. Figure 1g depicts the step of cutting, wherein the electrical connectors 5, 5a, ... extending between the electronic chips 4,... as well as the substrate 3 are cut so as to form individual contactless electronic modules 1, see figures 2 and 3. Moreover, the step of cutting results in the formation of parts of the electrical connectors 5, 5a, ... that protrude from the electronic chips 4,.... In addition, the cutting is performed in a region where the electrical connectors 5, 5a, ... are not covered by the protective element 13. In other words, it is preferred to cut through an uncovered region or a middle region 25, 25a, .. of the electrical connectors 5, 5a, ... that is arranged between the free ends 11, 11a, 11b, ... of the electrical connectors 5, 5a, ... being connected to the electronic chips 4, 4a, ....

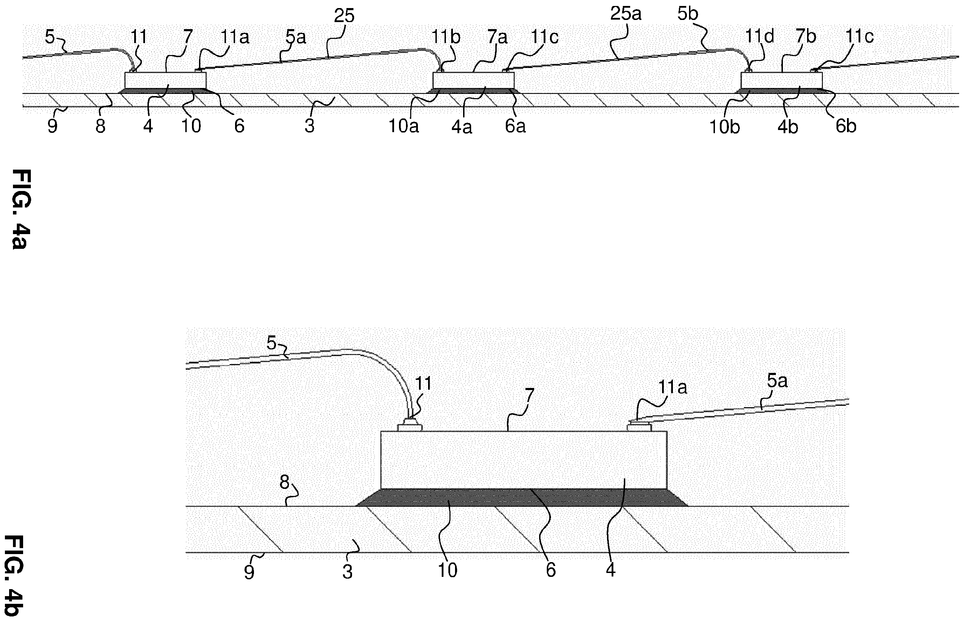

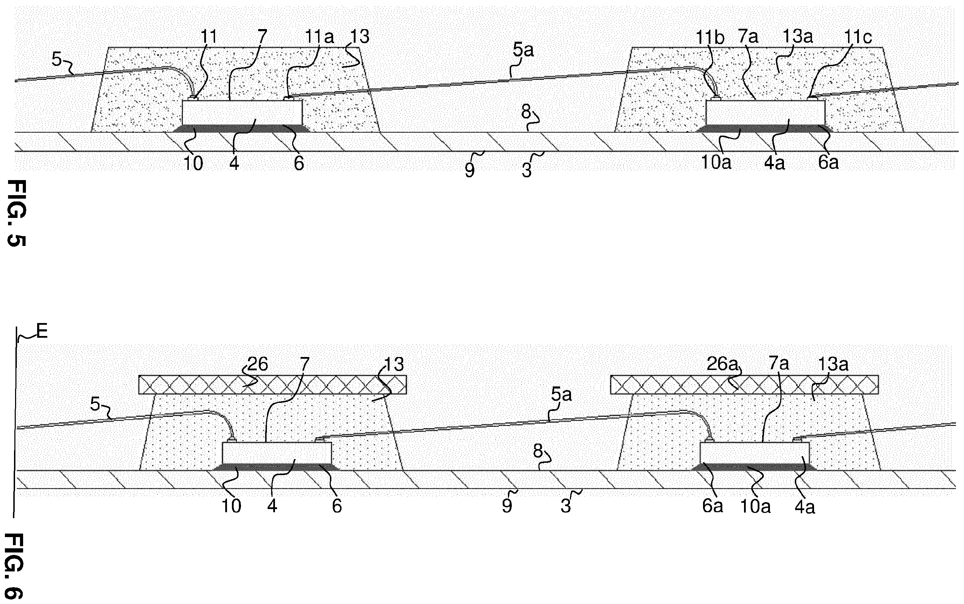

Figures 4a to 7 depict different electronic modules 1 according to the invention in a state before the electrical connectors 5, 5a, ... are cut. Namely, and as follows from figure 4a, the electronic chips 4,... are preferably connected to the surface 8 of the substrate 3 by an adhesive element 10 such as a die attach glue or an adhesive. That is, the electronic chips 4,... can be in contact with the surface 8 of the substrate 3 via adhesive elements 10. In fact, the adhesive elements 10 are arranged here between the surface 8 of the substrate 3 and the surface 6 of the electronic chips 4,.... Moreover, and as follows from figure 4b, the electrical connectors 5, 5a, ... are arranged on a surface 7 of the electronic chips 4,... being opposite to the surface 6 of the electronic chips 4,... that are connected to the surface 8 of the substrate 3. A connection of the electrical connectors 5, 5a, ... to the surface 7 of the electronic chips 4,... is achieved here by ball bonding and wedge bonding via bumps as it is known in the art. As mentioned earlier, a protective element 13 is preferably provided. From figure 5 it follows that said protective element 13 can be a resin being applied in a molding process as it is known in the state of the art as well.

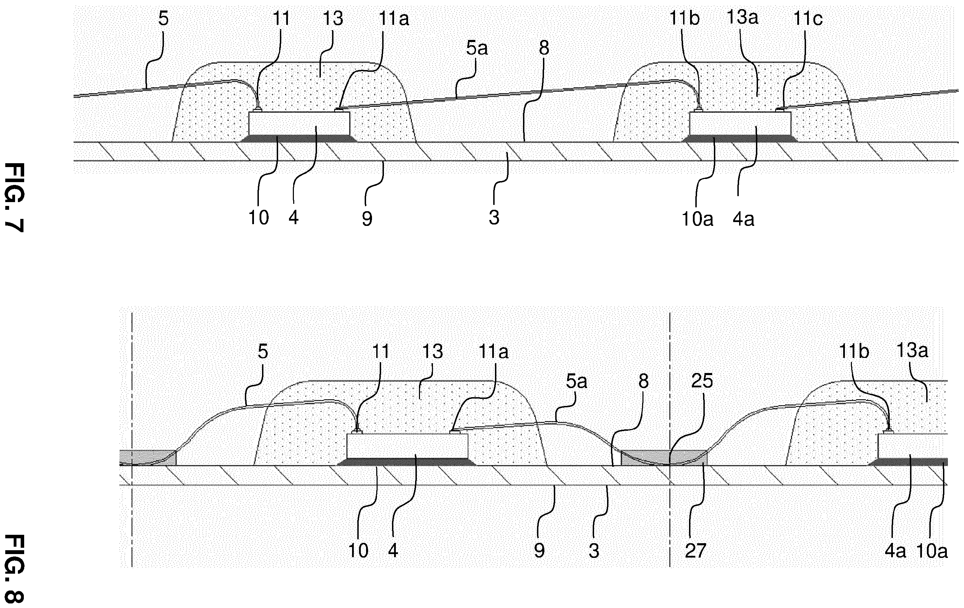

Furthermore, and as follows from figure 6, the contactless electronic modules 1 can comprise a stiffening element 26, 26a, .... Said stiffening element 26, 26a, ... is arranged here on the protective element 13, 13a, ... and in a region of the protective element 13, 13a, ... that faces away from the substrate 3. The stiffening element 26, 26a, ... preferably corresponds to a stiffening element as it is known in the art, e.g. an RLC stiffener. Hence, when seen along an extension direction E extending from the substrate 3, the electronic chip 4, 4a, ... is arranged after the substrate 3, and the stiffening element 26, 26a, ... is arranged after the electronic chip 4, 4a, .... In other words, the electronic chip 4, 4a, ... is sandwiched between the substrate 3 and the stiffening element 26, 26a, .... Figure 7 depicts another conceivable protection element 26, 26a, ..., which is provided here by dispensing resin.

Figure 8 depicts the attachment of the electrical connectors 5, 5a, ... to the substrate 3. In fact, a part of the electrical connector 5, 5a, ... is connected to the substrate 3 by performing a step of pressing the electrical connector 5, 5a, ... onto the substrate 3. Said step of pressing is preferably performed in a lamination step and by lamination plates (not depicted). Said part of the electrical connector 5, 5a, ... corresponds to a region where the electrical connector 5, 5a, ... is not covered by the protective element. In other words, it is preferred to press the electrical connector 5, 5a, ... in the uncovered region or the middle region 25 of the electrical connector 5, 5a, ... that is arranged between the free ends 11, 11a, ... of the electrical connector 5, 5a, ... being connected to the electronic chips 4, 4a, .... Furthermore, in the embodiment depicted in figure 8 an adhesive element 27 is present on the surface of the substrate 3, and wherein the electrical connector 5, 5a, ..., in particular its middle region 25, is pressed onto the surface 8 of the substrate 3 in the region of said adhesive element 27. In fact, it is particularly preferred to provide the adhesive element 27 while the electrical connector 5, 5a, ... is pressed. It is particularly preferred that the step of pressing and the provision of the adhesive element 27 is performed in a combined or common step of lamination of an adhesive such as hotmelt, which serves the purpose of connecting the electrical connector 5, 5a, ... to the substrate 3 and to maintain the electrical connector 5, 5a, ... in a desired position. After the electrical connectors 5, 5a, ... are connected to the surface 8 of the substrate 3, it is preferred to perform the step of cutting so as to obtain the individual electronic modules 1 as mentioned with respect to figure 1g above. The dashed lines in figure 8 depict a preferred module cutting axis along which the step of cutting is performed.

As follows from figure 9, the contactless electronic modules 1 according to the invention are preferably provided in a data carrier 2. The data carrier 2 preferably constitutes or is part of a security document such as a smart card, a credit card, a driving licence, an identity card, a passport, a data page or the like.

The data carrier 2 comprises a carrier body 16. The carrier body 16 preferably corresponds to a card body as it is commonly known in the card industry. The carrier body 16 comprises a top side 20 and an opposing bottom side 21, and wherein the contactless electronic module 1 is arranged here in a region of the top side 20 of the carrier body 16 and provides at least part of the top side 20 of the carrier body 16. Moreover, in the depicted example the top side 20 of the carrier body 16 constitutes the top side 14 of the data carrier 2. In other words, the data carrier 2 comprises a top side 14, and wherein the contactless electronic module 1 is arranged in a region of the top side 14 of the data carrier 2 and provides at least part of the top side 14 of the data carrier 2. Furthermore, the carrier body 16 comprises a cavity 17, and wherein the contactless electronic module 1 as well as an antenna 18 being in communication with the contactless electronic module 1 are at least partially arranged in the cavity 17. The carrier body 16 furthermore comprises components as they are commonly used in the state of the art. For instance, the carrier body 16 comprises not only an antenna 18 but furthermore and at least one electrically conductive element 24 that enables a communication between the contactless electronic module 1 and the antenna 18. Said conductive element 24 corresponds here to electrically conductive materials as they are known in the art, e.g. silver glue or the like. Moreover, the conductive element 24 is provided in the cavity 17 of the carrier body 16. Moreover, the free ends 12, 12a, ... of the electrical connectors 5, 5a, ... are attached to a surface 28 of the cavity 17 of the carrier body 16 by means of the adhesive element 27 that has been provided to the middle region 25 of the electrical connector 5, 5a,... prior to its cutting and thus to the free ends 12, 12a, ... after the cutting.

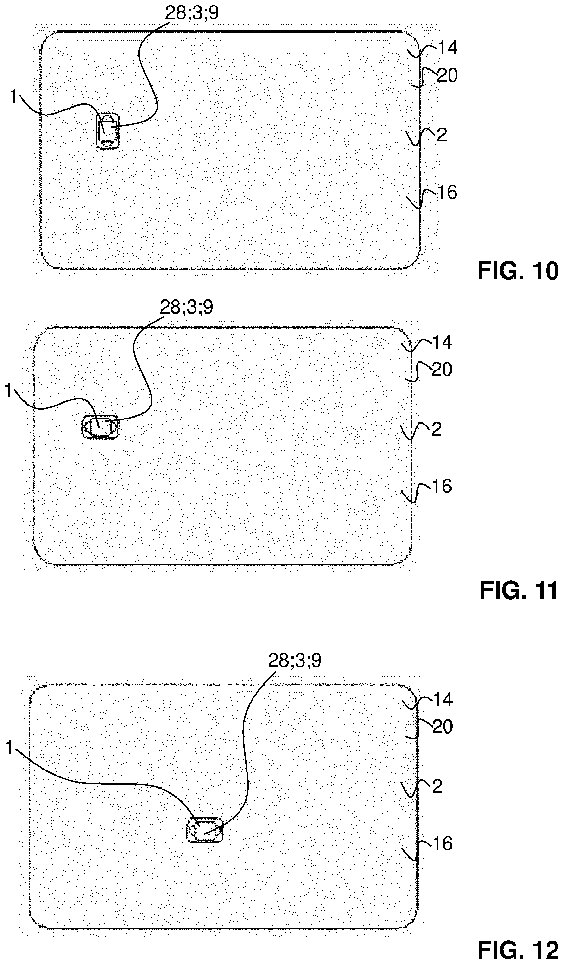

In the installed state of the contactless electronic module 1 being depicted in figures 9 to 14, a top side 28 of the contactless electronic module 1 faces or even provides the top side of the carrier body 20 and here also the top side 14 of the data carrier 2. The top side 14 of the data carrier 2 in turn faces a user or holder of the data carrier 2. To this end various arrangements of the contactless electronic module 1 in the data carrier 2 are conceivable. As becomes readily apparent from figure 9, the substrate 3 of the contactless electronic module 1 provides the top side 28 of the contactless electronic module 1 and, in the installed state, the top side 14 of the data carrier 2 in the event that the contactless electronic module 1 is arranged in the data carrier 2. In other words, it is preferred that the contactless electronic module 1 is not arranged or embedded within a data carrier 2 but that it is arranged in a region of the top side 14 or even provides the top side 14 of the data carrier 2.

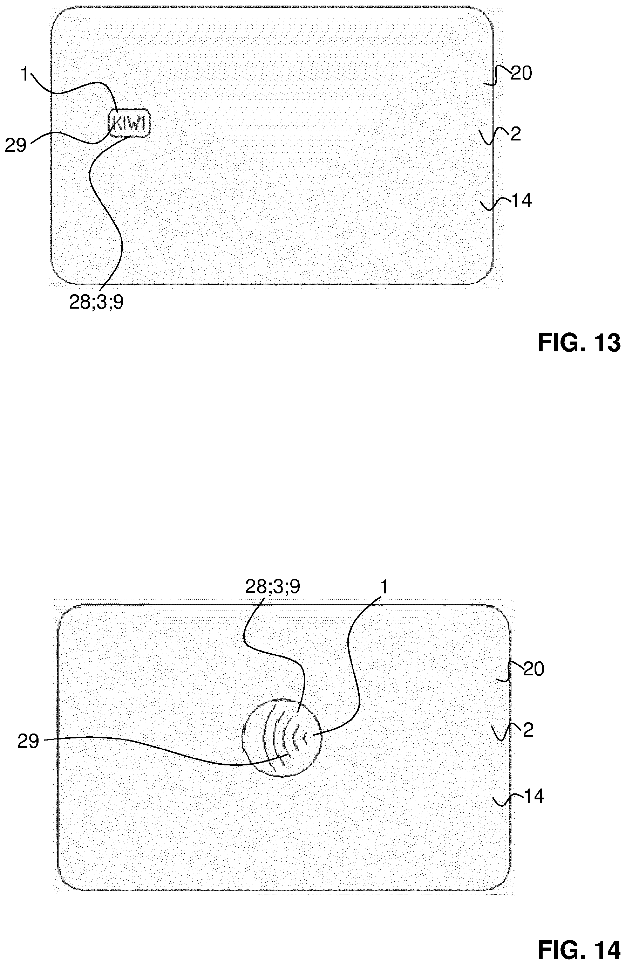

Moreover, and as follows from figures 13 and 14, the top side 28 of the contactless electronic module 1, in particular a top surface 9 of the substrate 3, can comprise one or more personalization elements 29. Thereby, the top side 20 of the carrier body16, and thus the top side 14 of the data carrier 2, can comprises one or more personalization elements 29 as well. Said personalization element 29 preferably serves the purpose of attributing personalized information and can have the shape of an image and/or of an alphanumeric character. In the example depicted in figure 13, the personalization element 29 corresponds to the letters "KIWI" and in the example depicted in figure 14 the personalization element 29 corresponds to the image commonly used to indicate the capability of a wireless communication.

**LIST OF REFERENCE SIGNS**

| | | | |
|---|---|---|---|
| 1 | contactless electronic module | 20 | top side carrier body |
| 2 | data carrier | 21 | bottom side carrier body |
| 3 | substrate | 22, 22a, ... | perforation |
| 4, 4a, ... | electronic chip | 23 | side area |
| 5, 5a, ... | electrical connector | 24 | conductive element |
| 6 | surface electronic chip | 25 | middle region |
| 7 | surface electronic chip | 26 | stiffening element |
| 8 | surface substrate | 27 | adhesive element |
| 9 | surface substrate | 28 | top side contactless |
| 10 | adhesive element | | electronic module |
| 11 | free end electrical connector | 29 | personalization element |
| 12 | free end electrical connector | | |
| 13 | protective element | A | arrangement direction |
| 14 | top side data carrier | D | connection direction |
| 15 | bottom side data carrier | E | extension direction |
| 16 | carrier body | L | longitudinal direction |
| 17 | cavity | T | transverse direction |
| 18 | antenna | V | vertical plane |
| 19 | recess | | |

## Claims

1. A contactless electronic module (1) for a data carrier (2), the contactless electronic module (1) comprising:
- a substrate (3);
- at least one electronic chip (4); and
- at least one electrical connector (5), wherein the electronic chip (4) is arranged on the substrate (3), and wherein the electrical connector (5) is in connection with the electronic chip (4),
**characterized in that** the substrate (3) is electrically non-conductive.

2. The contactless electronic module (1) according to claim 1, wherein the substrate (3) comprises or consists of one or more polymers and/or one or more cellulose-comprising compounds and/or one or more lignin-comprising compounds and/or one or more fiber-reinforced plastics,
wherein the one or more polymers preferably are synthetic polymers and/or thermoplastic polymers and/or thermosetting polymers, and/or
wherein the one or more cellulose-comprising compounds and/or the one or more lignin-comprising compounds preferably comprise or consist of paper and/or wood, and/or
wherein the one or more fiber-reinforced plastics preferably comprises an epoxy resin and/or a polyester resin being reinforced with inorganic fibers such as glass.

3. The contactless electronic module (1) according to any one of the preceding claims, wherein a surface (6) of the electronic chip (4) is arranged in direct contact with a surface (8) of the substrate (3) or wherein the surface (6) of the electronic chip (4) is in contact with the surface (8) of the substrate (3) via at least one adhesive element (10), and/or
wherein the electrical connector (5) comprises or consists of one or more metals and/or one or more metal-containing compounds.

4. The contactless electronic module (1) according to any one of the preceding claims, wherein the electrical connector (5) comprises a first free end (11) that is in connection with the electronic chip (4) preferably via a contactless pad being arranged on the electronic chip (4), and/or
wherein the electrical connector (5) comprises a second free end (12) that is in connection with the substrate (3), in particular with a surface (8) of the substrate (3) and/or via at least one adhesive element (10).

5. The contactless electronic module (1) according to any one of the preceding claims, further comprising at least one protective element (13),
wherein the protective element (13) at least partially covers the electronic chip (4) and/or the electrical connector (5), and/or
wherein at least part of the electrical connector (5), in particular a free end (12) of the electrical connector (5), is not covered by the protective element (13), and/or
wherein the protective element (13) comprises or consists of a resin.

6. The contactless electronic module (1) according to any one of the preceding claims, comprising at least one further electrical connector (5a), and
wherein the electrical connector (5) and the further electrical connector (5a) are preferably arranged opposite to one another with respect to the electronic chip (4) and/or extend from the electronic chip (4) along opposing connection directions (D).

7. A data carrier (2) comprising at least one contactless electronic module (1) according to any one of the preceding claims,
wherein the data carrier (2) preferably comprises a top side (14), and wherein the contactless electronic module (1) is preferably arranged in a region of the top side (14) of the data carrier (2) and particularly preferably provides at least part of the top side 14() of the data carrier (2).

8. The data carrier (2) according to claim 7, further comprising at least one carrier body (16),
wherein the carrier body (16) comprises at least one cavity (17), and wherein the contactless electronic module (1) and/or at least one antenna (18) being in communication with the contactless electronic module (1) are at least partially arranged in the cavity (17).

9. A method of producing a contactless electronic module (1), in particular a contactless electronic module (1) as claimed in one of claims 1 to 6, the method comprising the steps of:
- Providing a substrate (3);
- Providing at least one electronic chip (4); and
- Providing at least one electrical connector (5), wherein the electronic chip (4) is arranged on the substrate (3), and wherein the electrical connector (5) is in connection with the electronic chip (4),
**characterized in that** the substrate (3) is electrically non-conductive.

10. The method according to claim 9, further comprising the step of arranging at least one further electronic chip (4a) on the substrate (3), and connecting the electrical connector (5) being in connection with the electronic chip (4) to the further electronic chip (4a).

11. The method according to claim 9 or 10, further comprising the step of providing at least one adhesive element (10) preferably on a surface (8) of the substrate (3) and/or in a lamination step, and/or
further comprising the step of connecting at least part of the electrical connector (5) with the substrate (3), preferably with a surface (8) of the substrate (3) and/or in a lamination step, and/or
further comprising the step of providing at least one protective element (13).

12. The method according to claim 11, wherein at least one recess (19) is punched into the adhesive element (10) in a punching step before the adhesive element (10) is provided on the substrate (3), and
wherein said at least one recess (19) is preferably provided at least partially in a region of the electronic chip (4) and/or the electrical connector (5), whereby the electronic chip (4) and/or the electrical connector (5) comprises in the region of the recess (19) an exposed area.

13. The method according to any one of claims 10 to 12, further comprising the step of cutting, wherein the electrical connector (5) extending between the electronic chip (4) and the further electronic chip (4a) is cut so as to form individual contactless electronic modules (1).

14. A method of producing a data carrier (2), preferably a data carrier (2) according to claim 7 or 8, the method comprising the steps of:
- Providing at least one contactless electronic module (1) as claimed in any one of claims 1 to 6 and/or as produced in the method as claimed in any one of claims 9 to 13; and
- Providing at least one carrier body (16);
wherein the carrier body (16) preferably comprises a top side (20), and wherein the contactless electronic module (1) is preferably arranged in a region of the top side (20) of the carrier body (16) and particularly preferably provides at least part of the top side 20() of the carrier body (16), and/or
wherein the carrier body (16) preferably comprises at least one antenna (18) being configured for communication with the contactless electronic module (1).

15. The method according to claim 14, further comprising the step of milling, wherein at least one cavity (17) is milled into the carrier body (16), and
preferably further comprising the step of embedding, wherein the contactless electronic module (1) is at least partially embedded in the cavity (16) and is preferably electrically connected to the antenna (18).
